(19) Europäisches Patentamt
European Patent Office
Office européen des brevets

(11) **EP 0 909 517 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(21) Anmeldenummer: **98924233.4**

(22) Anmeldetag: **28.04.1998**

(51) Int Cl.:
***H04N 13/00*** *(2006.01)*

(86) Internationale Anmeldenummer:
**PCT/EP1998/002504**

(87) Internationale Veröffentlichungsnummer:
**WO 1998/049837 (05.11.1998 Gazette 1998/44)**

(54) **VERFAHREN UND SYSTEM ZUR PROJEKTION VON BILDERN AUF EINEN SCHIRM MIT HILFE EINES LICHTBÜNDELS**

METHOD AND FACILITY FOR LIGHT-BEAM PROJECTION OF IMAGES ON A SCREEN

PROCEDE ET SYSTEME DE PROJECTION D'IMAGES SUR UN ECRAN A L'AIDE D'UN FAISCEAU LUMINEUX

(84) Benannte Vertragsstaaten:
**CH DE FR GB LI NL**

(30) Priorität: **30.04.1997 DE 19718301**
**27.02.1998 DE 19808264**

(43) Veröffentlichungstag der Anmeldung:
**21.04.1999 Patentblatt 1999/16**

(60) Teilanmeldung:
**10012531.9**

(73) Patentinhaber: **Infitec GmbH**
**89091 Ulm (DE)**

(72) Erfinder: **JORKE, Helmut**
**D-89547 Gerstetten (DE)**

(74) Vertreter: **Straub, Bernd**
**Cartesiusstraße 25**
**D-89075 Ulm (DE)**

(56) Entgegenhaltungen:
**EP-A- 0 473 343     US-A- 4 623 219**
**US-A- 4 641 178     US-A- 5 537 476**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Projektion von Bildern auf einen Schirm mit Hilfe eines Lichtbündels. Weiter bezieht sich die Erfindung auf ein System mit einem einzigen Projektor zur Darstellung eines Bildes auf einem Schirm mit Hilfe eines Lichtbündels, wobei das System insbesondere zur Durchführung des erfindungsgemäßen Verfahrens eingesetzt werden kann.

Bildprojektionen sind schon seit längerem bekannt. Hier sei vor allen Dingen die Latema Magica aus dem Jahre 1569 genannt, die häufig als Vorläufer moderner Diaapparate und Episkope bezeichnet wird. Weiter sind in diesem Rahmen auch Filmprojektoren, Videoprojektoren und Head-Up-Projektoren zu nennen.

Bei den Videoprojektoren sind heute neben Eidophoren und Bildröhrenprojektoren auch Projektoren zu finden, die ein auf einer LCD-Matrix elektrisch eingestelltes Videobild nach Art eines Dias auf einen Schirm projizieren. Weiter sind heute Projektoren in der Entwicklung, bei denen ein Lichtbündel auf eine Kippspiegelmatrix gerichtet wird, wobei die Kippspiegelmatrix den Bildinhalt durch schnelles Ein- und Ausschalten einzelner Kippspiegel aufgrund lokal verschiedener Reflexionen eines Lichtbündels erzeugt, das dann durch ein Objektiv auf einen Schirm geworfen wird. Modernere Entwicklungen, befassen sich auch mit der Darstellung von Videobildern auf einem Schirm, dadurch, daß ein Laserstrahl, ähnlich wie in der Elektronenstrahlröhre ein Elektronenstrahl, auf einem Schirm gerastert wird. Der Laserstrahl wird für die beim Rastern jeweils beleuchteten Bildpunkte farb- und intensitätsmoduliert und ein Videobild für einen Beobachter aufgrund des schnellen Rasterns sowie der Trägheit seiner Augen sichtbar gemacht.

Verfahren zur Projektion von Bildern mit diesen Projektionstechniken werden heute vielfältig gewerblich eingesetzt. Als bekanntes Beispiel sei hier nur das Kino genannt. Ferner wird das Geschehen bei Showveranstaltungen, Parteiversammlungen und ähnlichen Großveranstaltungen häufig durch Abbilden von Rednern oder Künstlern mit Hilfe der Videogroßprojektion einem weit entfernten Publikum näher gebracht.

Weiter werden derartige Projektionsverfahren auch in der Werbung, insbesondere auf Messen, eingesetzt.

Schwierigkeiten machen derartige Projektionen aber insbesondere bei Tageslicht. Die Lichtstärke reicht üblicherweise gegenüber Sonnenlicht, das ebenfalls auf den Bildschirm fallen kann, nicht aus, einen genügend hohen Kontrast zu liefern, um deutliche, qualitativ hochwertige Bilder zu sehen. Bei hellem, auf den Schirm fallenden Sonnenlicht, kann üblicherweise überhaupt kein Bild mehr erkannt werden. Dagegen wäre es äußerst wünschenswert, bei Großveranstaltungen im Freien, Open-Air-Konzerten, Fußballspielen o. ä., auch derartige Projektionstechniken einzusetzen, damit auch weit vom Geschehen entfernten Zuschauern, beispielsweise bei einem Fußballspiel, Details auf einer Großbildleinwand deutlich gemacht werden können, um für diesen eine Teilnahme an der Veranstaltung attraktiv zu gestalten und sie davon abzuhalten, sich alternativ die Übertragung der Veranstaltung im Fernsehen anzusehen.

Aufgabe der Erfindung ist es, bei Projektionen von Bildern auf einen Schirm den Kontrast der Bildprojektion gegenüber Umgebungslicht, insbesondere Sonnenlicht, zu erhöhen.

Die Aufgabe wird ausgehend vom eingangs genannten Stand der Technik durch ein Verfahren gelöst, bei dem ein einziger Projektor zum Projizieren der Bilder vorgesehen ist, dessen zur Projektion eingesetztes Lichtbündel aus einer Lichtquelle im Projektor emittiert wird, deren Licht mindestens einen spektralen Peak im sichtbaren Wellenlängenbereich mit einer Halbwertsbreite kleiner als 100 nm und insbesondere kleiner als 30 nm aufweist, und bei dem an Beobachter des Bildes Augengläser ausgehändigt werden, die eine wellenlängenabhängige Transmissionsfunktion aufweisen, aufgrund der von jedem Augenglas Licht im Wellenlängenbereich von mindestens einem spektralen Peak oder bei mehreren spektralen Peaks im Wellenlängenbereich von mindestens einem von diesen durchgelassen wird und die Lichtintensität für Licht mit Wellenlängen außerhalb dieses oder dieser spektralen Peaks verringert wird.

Ein eingangs genanntes System ist zur Durchführung des Verfahrens erfindungsgemäß gekennzeichnet durch eine das Lichtbündel emittierende Lichtquelle im Projektor, deren Licht mindestens einen spektralen Peak im sichtbaren Wellenlängenbereich mit einer Halbwertsbreite kleiner als 100 nm und insbesondere kleiner als 30 nm aufweist, sowie durch mindestens ein Augenglas, für das eine wellenlängenabhängige Transmissionsfunktion vorgesehen ist, aufgrund der vom Augenglas ausschließlich Licht im Wellenlängenbereich des mindestens einen spektralen Peaks durchgelassen wird oder bei mehreren spektralen Peaks im Wellenlängenbereich von mindestens einem von diesen durchgelassen wird und die Lichtintensität für Licht mit Wellenlängen außerhalb dieses oder dieser spektralen Peaks verringert ist.

Die Projektion erfolgt dabei also mit Licht, das sehr schmalbandig in engen Wellenlängenbereichen, nämlich innerhalb der spektralen Peaks, emittiert wird. Nur Licht, das innerhalb eines Wellenlängenbereichs dieser spektralen Peaks erzeugt wird, wird durch das Augenglas erfaßt, so daß ein Beobachter, der durch dieses Augenglas sieht, die gesamte Bildinformation genauso wie ohne das Augenglas erfassen kann. Dagegen wird das Umgebungslicht, beispielsweise Sonnenlicht, durch Ausfiltern größerer Wellenlängenbereiche insgesamt gedämpft.

In diesem Sinne wird in einem Diagramm, bei dem die Lichtintensität über die Wellenlänge aufgetragen ist, als spektraler Peak eine Spitze, eine gaußähnliche Verteilung, eine Rechteckfunktion oder jede Kurve verstanden, deren Halbwertsbreite deutlich kleiner als die Breite der Hellempfindlichkeitskurve des menschlichen Auges, beispielsweise nach DIN 5031 ist, die etwa 100 nm breit ist. Wichtig ist dabei, daß aufgrund des Funktionsverlaufs im Intensitäts-/Wellenlängendiagramm nur ein schmaler Wellenlängenbereich für die Lichterzeugung und die Transmission durch das Augenglas zur Verfügung steht.

Die angegebene Halbwertsbreite von 100 nm bzw. 30 nm der spektralen Peaks hat sich als Obergrenze als besonders vorteilhaft herausgestellt, da dies auch, selbst wenn eine Farbdarstellung angestrebt ist, eine vernünftige Trennung von Projektionslicht und Umgebungslicht erlaubt. Hierzu ist insbesondere auszuführen, daß weißes Licht eine Mischung aus mindestens drei Primärfarben erforderlich macht, so daß auch Licht zum Darstellen von Schwarz-/Weißbildern mindestens drei spektrale Peaks aufweisen sollte. Darauf ist die Erfindung allerdings nicht beschränkt. Bei einigen Anwendungsfällen, bei denen eine Großprojektion Schrift in einer einzigen Farbe verlangt, beispielsweise bei Werbeveranstaltungen, würde eine monochrome Darstellung mit einem einzigen spektralen Peak völlig ausreichen. Doch ist auch für dieses Beispiel eine Obergrenze von 100 nm bzw. 30 nm Halbwertsbreite zu empfehlen, um unter Berücksichtigung der logarithmischen Augenempfindlichkeit immer noch einen genügend großen Kontrast gegenüber dem Umgebungssonnenlicht zu schaffen.

Ähnliche Bedingungen herrschen auch bei Lasershows vor, auf die sich die Erfindung ebenso bezieht. Allerdings ist hier der Begriff des Schirms sehr weit zu verstehen, er umfaßt nämlich auch Nebel oder ähnliches aus einer Nebelmaschine oder eine Wasserwand.

Die Augengläser können beispielsweise in Brillen eingebaut sein. Es ist jedoch auch möglich, den Beobachtern als Augengläser entsprechende Scheiben oder Folien auszuhändigen, die sie dann bei grellem Sonnenlicht vor ihr Sichtfeld halten können.

Unerwarteterweise ließ sich die Aufgabe nicht durch triviale Maßnahmen, wie die Erhöhung der Lichtleistung, oder andere aufwendigere Alternativen, wie eine spezielle technische Ausgestaltung des Schirms, lösen. Die erfindungsgemäße Lösung ist dagegen sehr einfach. Im Prinzip muß man aus der Lichtquelle nur geeignetes Licht wie bei einem Monochromator spektrometrisch separieren oder auch die Lichtquelle bekannter Projektoren durch geeignete monochromatische Lichtquellen, beispielsweise Laser, ersetzen. Auch die Fertigung verwendbarer Augengläser bietet technisch im wesentlichen keine Schwierigkeiten. Hierfür kann man insbesondere durch Aufdampfen dielektrischer Schichten auf einem Glassubstrat oder Folien nahezu jedes gewünschte Transmissionsverhalten einstellen. Diese Technik ist beispielsweise aus der Vergütung von Linsen und Spiegeln bekannt.

In Massenproduktion läßt sich ein Aufdampfen dielektrischer Schichten auch hinreichend kostengünstig durchführen, um jedem Besucher einer Großveranstaltung, bei der die erfindungsgemäße Projektion eingesetzt wird, mit einem entsprechenden Augenglas auzurüsten, ohne daß der Eintrittspreis für derartige Veranstaltungen wesentlich erhöht werden müßte.

Gemäß einer vorzugsweisen Weiterbildung der Erfindung ist vorgesehen, daß das Augenglas in einer den Köpfen von Beobachtern angepaßten Brille angeordnet ist, an der eine Abschirmung gegen Licht vorgesehen ist, die einen Lichteinfall zwischen Augenglas und Auge des Beobachters verhindert.

Das heißt, diese Brille weist eine Abschirmung auf, wie sie beispielsweise von Schweißbrillen bekannt ist. Bei Schweißbrillen dient die seitliche Abdeckung allerdings hauptsächlich zum Abblocken von Funken und Spänen. Im Fall der erfindungsgemäßen Projektion wird damit hingegen seitliches Licht abgeschirmt, um den Kontrast des vom Bild stammenden Lichts gegenüber Umgebungslicht weiter zu erhöhen.

Die Brille muß auch nicht unbedingt als zweigläsrige Brille ausgebildet sein. Es sind hierbei auch eingläsrige Brillen möglich, beispielsweise in einer Gestaltung, wie sie beispielsweise von Taucherbrillen bekannt ist, die ein einziges Sichtfenster aufweisen und die mit einem elastischen Band am Kopf befestigt sind und die durch das dichte Anliegen am Kopf vollständig gegen Umgebungslicht abschirmt.

Aus letzterem Beispiel der Taucherbrille erkennt man auch, daß Brillenbügel wie bei der normalen Brillenform nicht unbedingt erforderlich sind. Zum Festhalten der Brille am Kopf des Beobachters sind beispielsweise auch ein um den Kopf des Beobachters geschlungenes elastisches Band oder zwei zusammenknotbare, an der Brille befestigte Bandteile, möglich.

Wie vorstehend schon deutlicher wurde, ist es insbesondere für schwarz/weiße oder farbige Bilder vorteilhaft, wenn das Lichtbündel gemäß einer vorteilhaften Weiterbildung der Erfindung mindestens drei spektrale Peaks aufweist, für die das Augenglas bezüglich ihrer Wellenlängenbereiche selektiv durchlässig ist. Mit einem derartigen Lichtbündel läßt sich beispielsweise Weiß sowie bei geeigneter Wahl der Lage und der Intensitäten der spektralen Peaks und beispielsweise bei Durchleuchtung eines Dias eine Vielzahl von Farben darstellen

Gemäß einer bevorzugten Weiterbildung der Erfindung wird von der Lichtquelle dazu Licht mit spektralen Peaks geeigneter Intensitäten und Schwerpunktswellenlängen emittiert, um es durch das Augenglas physiologisch als weiß erfaßbar zu machen. Die dafür geeigneten Intensitäten und Schwerpunktswellenlängen kann man aus Farbdreiecken, wie es aus der Druck- und Farbfernsehtechnik bekannt ist, entnehmen. Insbesondere bei sehr schmalen spektralen Peaks, die der Unterdrückung von Umgebungslicht ganz besonders förderlich sind, liegen dann die Farbtöne im CIE-Diagramm auf oder in der Nähe des Spektralkurvenzugs.

Bei Verwendung einer derartigen Lichtquelle zum Beleuchten eines Dias lassen sich dann auch farbige Bilder neben normalen Schwarz-/Weißbitdern darstellen, wobei das Dia die Intensität des Lichts der spektralen Peaks aus der Lichtquelle durch Absorption lokal unterschiedlich, je nach Farbe, verändert.

Für andere Ausführungen, beispielsweise der vorher schon genannten Laserprojektionstechnik ist eine vorteilhafte Weiterbildung der Erfindung dadurch gekennzeichnet, daß zum Darstellen eines Videobildes eine Steuereinrichtung vorgesehen ist, mit der die Intensitäten der spektralen Peaks im Lichtbündel unabhängig voneinander ansteuerbar sind und daß die Lichtquelle für Lagen der spektralen Peaks im Wellenlängenspektrum ausgebildet ist, bei denen ein Lichtbündel mit dieser Ansteuerung erzeugbar ist, dessen Licht physiologisch als Weiß erfaßbar ist. Bei dieser Weiterbildung läßt sich neben der Anwendung bei der Videoprojektion die Farbe des Lichtbündels mit Hilfe der Steuereinrichtung vorteilhafterweise auch so einstellen, daß beispielsweise für die Diaprojektion auch Farbkorrekturen über Farbeinstellung des projizierenden Lichtbündels durchgeführt werden können, damit ein möglichst naturgetreues Bild darstellbar wird.

Besonders schmale spektrale Peaks ergeben sich bei Einsatz von Laserlicht. Das Spektrum von Lasern ist üblicherweise sehr schmalbandig und daher erlauben Laser beim erfindungsgemäßen Einsatz einen sehr hohen Kontrast bei gleichzeitig geeignet schmaler Transmissionsfunktion der Augengläser. Dies wird in vorteilhafter Weise bei einer Weiterbildung der Erfindung ausgenützt, bei der die Lichtquelle mindestens drei Laser zum Erzeugen von Teillichtbündel unterschiedlicher Farbe sowie ein optisches System aufweist, welches das Licht der Teillichtbündel zu dem gemeinsamen Lichtbündel der Lichtquelle vereinigt.

Eine andere vorteilhafte Weiterbildung der Erfindung ermöglicht sogar das stereoskopische Sehen, indem zwei in einer Brille angeordnete Augengläser vorgesehen sind, deren spektrale Transmissionsfunktionen unterschiedliche Durchlaßbereiche haben und indem das aus dem Projektor fallende Lichtbündel ein Spektrum aufweist, das die Durchlaßbereiche beider Augengläser abdeckt, wodurch den beiden Augengläsern unterschiedliche Bildinformationen zur stereoskopischen Bilddarstellung zuordenbar sind.

Die Abstände der spektralen Peaks zwischen dem linken und dem rechten Augenglas kann bis zum 50 nm betragen.

Aufgrund der unterschiedlichen Transmissionsfunktion für das linke und das rechte Auge bei einer Brille lassen sich demgemäß mit ein und demselben Lichtbündel Informationen für die beiden Augen übertragen. Derartiges ist schon aus den Patents Abstract of Japan P-915, 10. August 1989, Band 13/Nr. 357, bekannt. Dabei müssen jedoch sechs Projektoren, je drei für jedes der beiden Augen, benützt werden. Aufgrund der Erfindung ist es möglich, einen einzigen Projektor für die Stereoprojektion einzusetzen, was in vorteilhafter Weise den hohen finanziellen Aufwand für sechs Projektoren vermindert. Für eine Kontrasterhöhung ist dieser Druckschrift nichts zu entnehmen und auch nicht möglich, da die Lichtleistung durch die Farbseparation stark verringert ist.

Dieser Aufwand für mehrere Projektoren wird insbesondere bei der Laserprojektion mit einem gerasterten Lichtbündel verringert, da dort gemäß der Weiterbildung beispielsweise dieselben Objektive und auch die gleichen Rastereinrichtungen für beide stereoskopisch für die beiden Augen bestimmten unterschiedlichen Bilder eingesetzt werden können.

Eine andere vorteilhafte Weiterbildung der Erfindung ist so ausgestaltet, daß das Lichtbündel einen zur Abbildung einzelner Bildpunkte des Videobildes geeigneten Durchmesser aufweist und eine Ablenkeinrichtung vorgesehen ist, die das gesamte mit der Information für beide Augen spektral beaufschlagte Lichtbündel ablenkt.

Wie aus den oben angegebenen vielfältigen Weiterbildungen schon erkennbar ist, kann die Erfindung für viele spezielle Anwendungen unterschiedlich ausgestaltet werden. Zur Vervollständigung seien hier, insbesondere für die Stereoprojektion, weitere Möglichkeiten angegeben. Dabei werden die aufgrund der unterschiedlichen spektralen Informationen vom Auge aufgenommenen Bilder im folgenden als Halbbilder bezeichnet, da dies die Erläuterung vereinfacht, wenn der Fachmann auch in der Fernsehtechnik unter "Halbbildern" etwas anderes versteht.

Bei dem gemäß der Erfindung ebenfalls möglichen Stereoprojektionsverfahren sendet jede halbbildprojizierende Einrichtung Licht mit spektralen Peaks mindestens dreier unterschiedlicher Wellenlängen aus und zwar mit einer Linienbreite kleiner als 30 nm und vorzugsweise kleiner als 5 nm, wobei die spektralen Peaks jeder halbbildprojizierenden Einrichtung in Spektralbereichen für dominante Erregung der blauen Rezeptoren, der grünen Rezeptoren und der roten Rezeptoren im menschlichen Auge liegen. Dabei überlagern sich die spektralen Peaks der projizierenden Einrichtungen für die Halbbilder des rechten und linken Auges nicht. Ein Beobachter betrachtet dann die projizierten Halbbilder mit einer Brille, deren Gläser als dielektrische Interferenzfilter ausgebildet sind und deren Transmissionsmaxima bei den spektralen Peaks der entsprechenden halbbildprojizierenden Einrichtungen liegen.

Insbesondere kann man durch die Brille das Farbempfinden anpassen, beispielsweise indem der für die Erregung der Blaurezeptoren zuständige spektrale Peak größerer Wellenlänge gegenüber dem spektralen Peak kürzerer Wellenlänge gemäß der Empfindlichkeitskurve des menschlichen Auges geschwächt wird oder der für die Erregung der Rotrezeptoren zuständige spektrale Peak kürzerer Wellenlänge gegenüber dem spektralen Peak größerer Wellenlänge gemäß der Empfindlichkeitskurve des menschlichen Auges abgeschwächt wird. Insbesondere lassen sich als Interferenzfilter vorteilhafterweise auch Fabry-Perot-Filter verwenden.

Insbesondere für Kuppelprojektionen, bei denen ein sehr großer Raumwinkelbereich von den Augen des Beobachters erfaßt werden soll, ist es ferner vorteilhaft, wenn als Augengläser dienende dielektrische Interferenzfilter in einer Weise gewölbt und positioniert werden, bei der sie jeweils eine konzentrische Teilkugelschale um den betreffenden Augapfel bilden.

Bei Verwendung monochromatischer Lichtquellen ist es für ein Zusammenführen der einzelnen Lichtbündel der monochromatischen Lichtquellen für ein gemeinsames Lichtbündel in vereinfachter Weise vorteilhaft, wenn deren Licht über Dispersionsprismen zusammengeführt wird. Bei einer anderen Ausführungsform, falls man beispielsweise keine monochromatischen Lichtquellen, wie Laser, verwendet, ist es insbesondere vorteilhaft, wenn in den halbbildprojizierenden Einrichtungen als Lichtquellen Strahler, beispielsweise eine Kombination von Superlumineszenzdioden verschiedener Farben verwendet werden, deren Spektren mit dielektrischen Interferenzfiltern zu schmalen Linienspektren gefiltert werden. Dazu ist es insbesondere vorteilhaft, um eine möglichst geringe Bandbreite zu schaffen, daß als dielektrische Interferenzfilter Fabry-Perot-Filter verwendet werden. Besonders günstige schmalbandige spektrale Peaks erreicht man dann mit geringem Aufwand, wenn man die Interferenzordnungen 5,6 und 7 zum Filtern bevorzugt einsetzt.

Diese Lichtquellen und die Filterung über Fabry-Perot-Filter ist insbesondere auch für elektronisch erzeugte Videobilder, beispielsweise mit der eingangs genannten Kippspiegeltechnik, möglich, wobei für die halbbildprojizierenden Einrichtungen elektronisch erzeugte Videobilder als Bildvorlagen verwendet werden. Auch hierbei kann man das Licht schon gemäß der spektralen Peaks filtern, bevor es auf die beispielhaft genannte Kippspiegelmatrix gerichtet wird. Eine andere vorzugsweise Weiterbildung sieht dagegen vor, daß das Emissionsspektrum, also im Beispiel der Kippspiegelmatrix das reflektierte Licht, mit dielektrischen Interferenzfiltern zu Linienspektren gefiltert wird. Auch hierzu kann man als dielektrische Interferenzfilter bevorzugterweise Fabry-Perot-Filter einsetzen, insbesondere unter Ausnutzung der Interferenzordnungen 5, 6 und 7.

Setzt man dagegen ein stereoskopisches Projektionsverfahren mit Lasern ein, ist ein Filtern zum Erreichen schmaler spektraler Peaks im Allgemeinen nicht notwendig, da Laser schon aufgrund ihres Aufbaus auf im wesentlichen eine Wellenlänge abgestimmt sind, wobei das Spektrum dann sehr schmalbandig ist. Hierfür ist es besonders vorteilhaft, wenn die mit den Halbbildern modulierten Laserlichtbündel über einen dichroitischen Spiegel mit einer Dreifachbandpaß-Charakteristik vereinfacht werden. Dies ist besonders für die verzerrungsfreie Abbildung der Halbbilder vorteilhaft.

Allerdings können zur Vereinigung der von den Lasern erzeugten Lichtbündel auch Dispersionsprismen bei ebenfalls verzerrungsfreier Abbildung der Halbbilder eingesetzt werden. Der Einsatz eines Dispersionsprismas ist jedoch wesentlich kostengünstiger als beispielsweise ein dichroitisches Spiegelsystem, wie es heutzutage vorzugsweise bei der rasternden Laserprojektionstechnik eingesetzt wird.

Einen besonders günstigen Werbeeffekt kann man bei diesen stereoskopischen Projektionen auch dadurch erreichen, daß identische Halbbilder für die beiden Augen projiziert werden, wobei deren Projektion aber einen horizontalen Versatz aufweist. Dadurch entsteht virtuell ein zweidimensionales Bild, das außerhalb der Projektionsfläche, hier dem Projektionsschirm, zu liegen scheint.

Die Erfindung wird nachfolgend anhand von Ausführungsbeispielen in Zusammenhang mit der beigefügten Zeichnung noch näher erläutert. Es zeigen:

Fig. 1	ein Videoprojektionssystem mit einem einzigen Projektor, dessen Licht sechs spektrale Peaks aufweist;

Fig. 2	ein Intensitäts/Wellenlängendiagramm für das in Fig. 1 eingesetzte Lichtbündel zur Darstellung der dort eingesetzten spektralen Peaks;

Fig. 3	eine Darstellung der Transmissionskurven für die beim Ausführungsbeispiel von Fig. 1 gezeigten Augengläser;

Fig. 4	ein Ausführungsbeispiel, bei dem die spektralen Peaks mit Fabry-Perot- Filter erzeugt werden;

Fig. 5	ein Ausführungsbeispiel mit Lasern als Lichtquellen;

Fig. 6	mehrere Diagramme zur Darstellung der spektralen Intensität und der Transmissionen für die Augengläser für das rechte und linke Auge beim Ausführungsbeispiel von Fig. 5;

Fig. 7	ein anderes Ausführungsbeispiel für die Laserprojektion;

Fig. 8	ein weiteres Ausführungsbeispiel für die Laserprojektion;

Fig. 9	ein Ausführungsbeispiel für die Laserprojektion mit Rastertechnik.

Im folgenden werden ausschließlich Stereoprojektionssysteme beschrieben. Diesbezüglich ist aber die Erfindung, wie vorstehend schon ausgeführt wurde, nicht beschränkt. Der große erfindungsgemäße Vorteil gegenüber herkömmlichen Techniken aufgrund des erhöhten Kontrasts gegenüber Tageslicht ergibt sich insbesondere auch dann, wenn für beide Augen eines Beobachters Augengläser mit derselben Transmissionsfunktion oder aber nur ein einziges Augenglas vorgesehen ist.

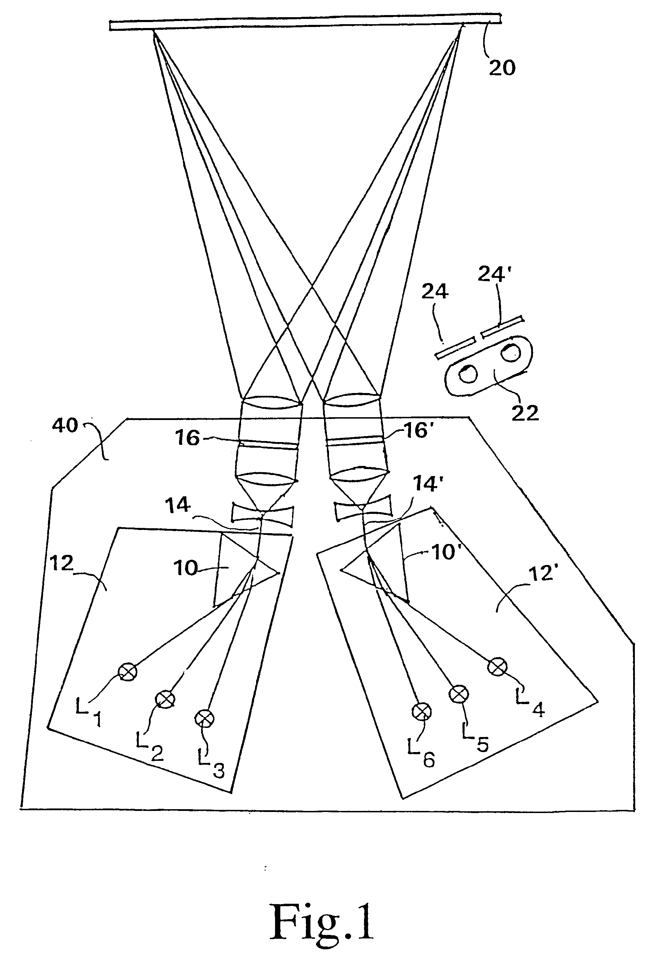

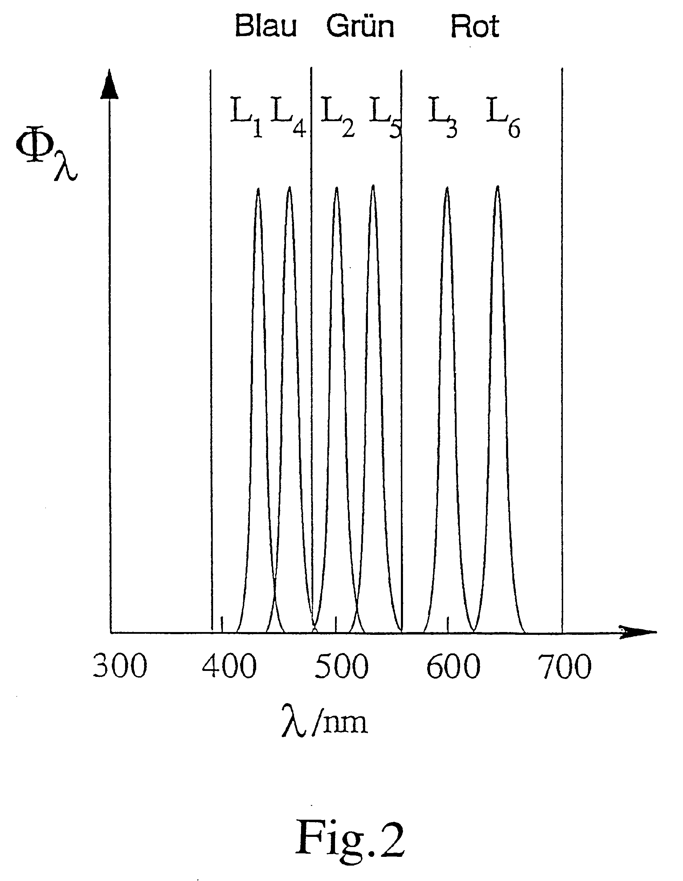

Fig. 1 zeigt ein Stereoprojektionssystem mit sechs im wesentlichen monochromatischen Lichtquellen $L_1$ bis $L_6$, deren Spektren in Fig. 2 wiedergegeben sind. Die spektralen Peaks von $L_1$ (430 nm) und $L_4$ (460 nm) liegen im Bereich dominanter Erregung der Blaurezeptoren im menschlichen Auge, ungefähr bei 380 bis 490 nm. Die spektralen Peaks von $L_2$ (502 nm) und $L_5$ (537 nm) liegen im Bereich dominanter Erregung der Grünrezeptoren, d. h. ungefähr bei 490 bis 555 nm. Die spektralen Peaks von $L_3$ (602 nm) und $L_4$ (644 nm) liegen im Bereich für dominante Erregung der Rotrezeptoren, also ungefähr bei 555 bis 700 nm.

Das von $L_1$, $L_2$ und $L_3$ emittierte Licht wird in einem Dispersionsprisma 10 vereinigt. In gleicher Weise dient ein Dispersionsprisma 10' zum Vereinigen der Lichtbündel von $L_4$, $L_5$ und $L_6$. Das Dispersionsprisma 10 bzw. 10' mit den Lichtquellen $L_1$, $L_2$, $L_3$ bzw. $L_4$, $L_5$, $L_6$ bilden dabei eine einzige Lichtquelle 12 bzw. 12', aus der ein einziges Lichtbündel 14 bzw. 14' austritt.

Die Lichtbündel 14 und 14' werden durch Linsensysteme aufgeweitet und fallen anschließend durch Diapositive 16 und 16', mit denen den Lichtbündeln 14 und 14' die Information für das linke und rechte Auge eines Beobachters 22 aufgeprägt wird. Diese Lichtbündel fallen anschließend auf einen Schirm 20, der eine Leinwand zur Aufprojektion oder eine Projektionswand zur Rückprojektion oder im weitesten Sinn auch Nebel aus einer Nebelmaschine oder eine Wasserwand sein kann.

Die Abbildung erfolgt über konventionelle Objektive, wie sie von üblichen Diaprojektoren bekannt sind und in Fig. 1 schematisch durch Einzellinsen angedeutet sind.

Die Bildtrennung am Ort eines Beobachters 22 erfolgt mit Fabry-Perot-Filtern 24 und 24'. Fabry-Perot-Filter weisen eine hohe Trennschärfe für einzelne spektrale Peaks auf und sind für einen hohen Kontrast gegenüber Umgebungslicht besonders geeignet. Die Lage der Transmissionsmaxima eines Fabry-Perot-Filters folgt der Beziehung

$$\lambda_m \approx \frac{2d}{m}$$

wobei d die optische Dicke des Dielektrikums des Filters und m die Ordnung der Interferenz des ausgefilterten Lichts ist. Unter der zur Vereinfachung in die Gleichung eingeflossene Annahme fehlender Dispersion im Dielektrikum muß man nur eine konstante wellenlängenunabhängige optische Dicke d betrachten. Mit d = 1.505 nm für das Fabry-Perot-Filter 24 ergeben sich für die Ordnungen m = 5, 6, 7 Transmissionsmaxima bei den Wellenlängen

$$\lambda_5 = 430 \text{ nm}$$

$$\lambda_6 = 502 \text{ nm}$$

$$\lambda_7 = 602 \text{ nm},$$

wie sie auch durch die spektralen Peaks der Lichtquellen $L_1$, $L_2$ und $L_3$ erzeugt werden. In ähnlicher Weise errechnet man mit d = 1.610 nm bezüglich des Fabry-Perot-Filters 24' die Wellenlänge der Transmissionsmaxima

$$\lambda_5 = 460 \text{ nm}$$

$$\lambda_6 = 537 \text{ nm}$$

$$\lambda_7 = 644 \text{ nm},$$

die den Lichtbündeln der Lichtquellen $L_4$ bis $L_6$ angepaßt sind.

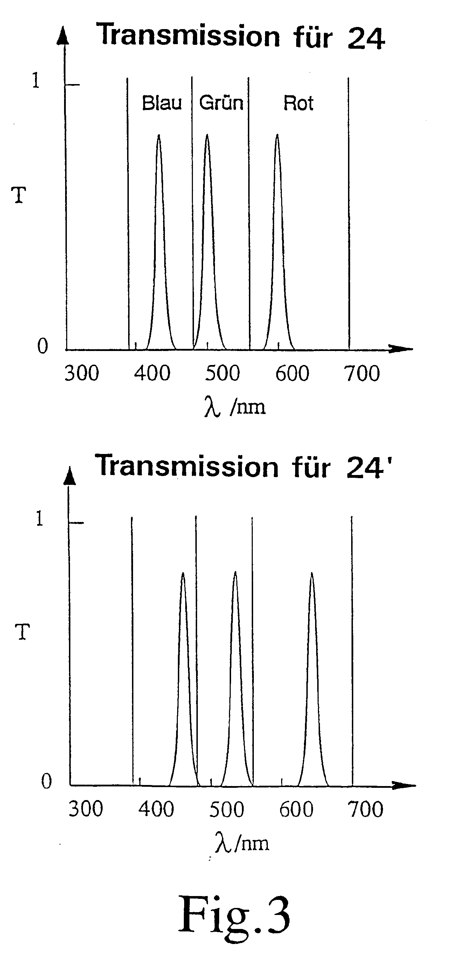

Die Lage der einzelnen spektralen Peaks der Lichtquellen $L_1$ bis $L_6$ ist insbesondere in Fig. 2 noch einmal wiedergegeben und die entsprechenden Transmissionskurven für die Fabry-Perot-Filter 24 und 24' sind in der Fig. 3 gezeigt.

Wie aus einem Vergleich der Fig. 2 mit der Fig. 3 zu entnehmen ist, wird dann vom linken Auge gemäß dem Ausführungsbeispiel von Fig. 1 nur der Bildinhalt des Dias 16 erfaßt, während dem rechten Auge des Beobachters 22 nur der Bildinhalt des Dias 16' zugeführt wird.

Wie eingangs schon ausgeführt wurde, sind diese Beispiele auf Stereoprojektion gerichtet. Insbesondere ist hier aber ganz wesentlich, daß Umgebungslicht, wie Sonnenlicht, aufgrund der in Fig. 3 gezeigten schmalen Transmissionskurven gedämpft wird. Diese Eigenschaft ist die Ursache dafür, daß bei Tageslichtprojektionen im Auge des Beobachters ein größerer Kontrast gegen Umgebungslicht erzielt wird.

Diese vorteilhafte Eigenschaft ergibt sich auch bei den nachfolgenden Ausführungsbeispielen, wenn auch nicht weiter darauf hingewiesen wird.

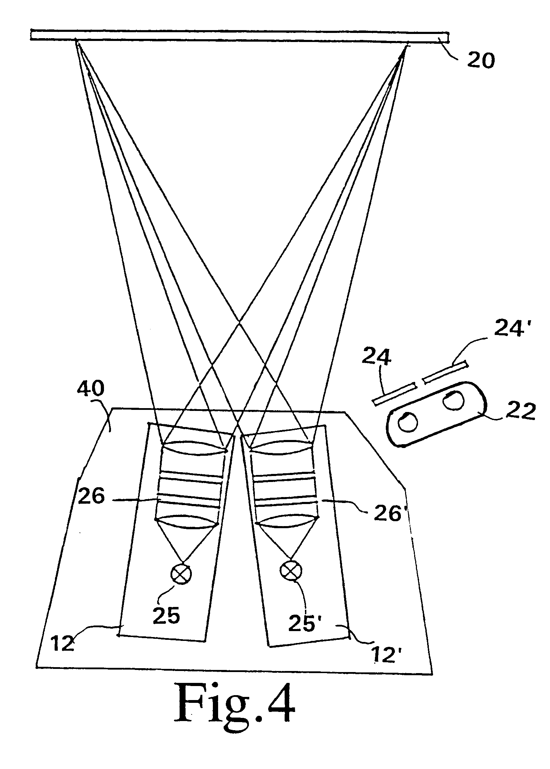

Ein anderes Ausführungsbeispiel ist schematisch in Fig. 4 gezeigt. Das Licht von Strahlern 25 und 25', die beispielsweise als Kombination unterschiedlich farbiger Superlumineszenzdioden aufgebaut sein können, wird über andere Fabry-Perot-Filter 26 und 26' gefiltert, so daß Spektren entstehen, wie sie schon in Fig. 2 angegeben sind und die auf die Transmissionskurven gemäß Fig. 3 angepaßt sind. Insbesondere kann man die Fabry-Perot-Filter 26 und 26' dazu in gleicher Weise ausbilden, wie die Fabry-Perot-Filter 24 und 24' auf den Augengläsern für den Beobachter 22.

Statt Dias können auch LCD-Matrixen eingesetzt werden, so daß mit dieser Technik auch Videoprojektionen durch Ansteuerung der LCD-Matrix mit dem Videobild möglich sind. Für eine Farbdarstellung müssen den einzelnen Bildelementen der LCD-Matrix in Form eines Rasters entsprechender Farbfilter unterschiedliche Farben zugeordnet werden, wenn man sich nicht auf Schwarz-/Weißbilder beschränken will.

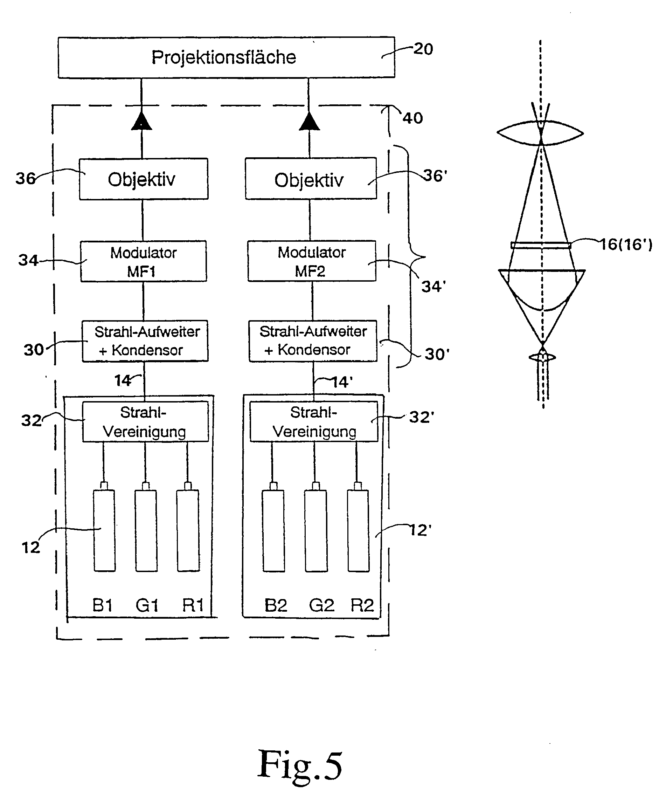

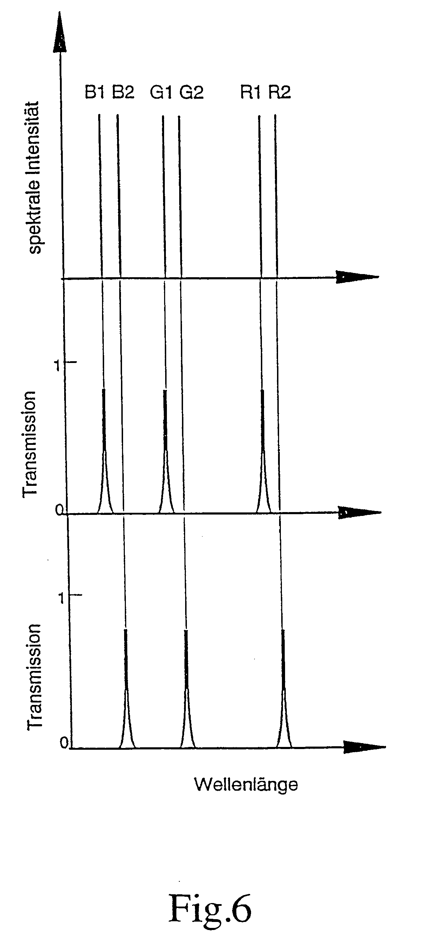

Fig. 5 zeigt beispielhaft ein Stereoprojektionssystem bestehend aus zwei halbbildprojizierenden Einrichtung mit Lasern $B_1$, $G_1$, $R_1$, $B_2$, $G_2$, $R_2$, deren Spektren in dem mit "spektrale Intensität" gekennzeichneten Diagramm der Fig. 6 wiedergegeben sind. Die Wellenlängen von $B_1$ und $B_2$ liegen im Bereich für dominante Erregung der Blaurezeptoren im menschlichen Auge. Die Wellenlängen von $G_1$ und $G_2$ liegen im Bereich für dominante Erregung der Grünrezeptoren. Weiter liegen die als spektrale Peaks verstandenen Laser $R_1$ und $R_2$ in einem Wellenbereich, in dem eine dominante Erregung der Rotrezeptoren erfolgt. Das von $B_1$, $G_1$ und $R_1$ emittierte Licht wird über dichroitische Spiegel oder über ein Dispersionsprisma zu einem einzigen Lichtbündel 14 vereinigt. In gleicher Weise erfolgt das Zusammenfügen des Lichtbündels 14' aus den einzelnen Strahlen der Laser $B_2$, $G_2$ und $R_2$.

Die Kombination der jeweiligen drei Laser mit der als Kasten angedeuteten Strahlvereinigungseinrichtung 32 bzw. 32', die hier beispielhaft als Dispersionsprisma ausgeführt waren, bilden wieder einzelne Lichtquellen 12, 12' mit den entsprechenden Ausgangslichtbündeln 14 und 14'. Die Lichtbündel werden durch eine Kombination von Strahlaufweiter und Kondensor 30 bzw. 30', wie vorstehend anhand von Fig. 1 schon deutlicher wurde, in geeigneter Weise zur gleichmäßigen Beleuchtung aufgeweitet. Dann fallen die Lichtbündel durch räumliche Modulatoren 34 bzw. 34'. Diese räumlichen Modulatoren modulieren das durch sie hindurchfallende Licht flächig. Diese Technik ist beispielsweise von der Diaprojektion oder der Projektion durch eine LCD-Matrix bekannt. Unterschiedliche Orte auf einem Dia oder auf einer mit einem Videobild beaufschlagten LCD-Matrix absorbieren beim Durchlaufen der Lichtbündel 14 und 14' unterschiedliche Anteile des Lichts, modulieren also das Licht räumlich oder örtlich.

Das so modulierte Licht durchläuft anschließend Objektive 36 und 36', mit denen es auf die Projektionsfläche 20 für die Reflexion zum Auge des Beobachters geworfen wird. Die Kombination des Strahlaufweiter und Kondensors 30 bzw. 30', des räumlichen Modulators 34 bzw. 34' und der Objektive 36, 36' ist nebenstehend zu der beschriebenen Schemazeichnung noch einmal zeichnerisch verdeutlicht, um dem Fachmann weitergehende Anleitung zu geben, die ihm gestatten, die Erfindung geeignet auszuführen.

Beide Systeme zur Projektion für das linke und das rechte Auge sind wie auch in den vorherigen Ausführungsbeispielen in einem einzigen Projektor 40 untergebracht, eine Eigenschaft, die aus dem bekannten Stand der Technik nicht bekannt war, gemäß dem für die Projektion für das linke und das rechte Auge jeweils ein eigener Projektor eingesetzt wurde. Der Vorteil, der sich aus dem Zusammenfügen zweier einzelner Projektoren zu einem gemeinsamen Projektor 40 ergibt, besteht vor allen Dingen darin, daß dann Stereobilder immer reproduzierbar auf einen Schirm geworfen werden, während bei getrennten Projektoren vor der Vorführung immer ein Abgleich der Standorte der einzelnen Projektoren erfolgen muß, damit das Bild immer als Stereobild erfaßt wird und nicht unterschiedlich große Bilder von den Augen des Beobachters gesehen werden, wie sie in der Natur nicht vorkommen, die daher das Gehirn des Beobachters irritieren und zu Kopfschmerzen, verbunden mit Unwohlsein und Übelkeit, führen würden, was für eine längere Vorführung ungeeignet wäre.

In Fig. 6 sind noch einmal Spektraldiagramm für die Intensität und die Transmission der Augengläser für das linke und das rechte Auge gezeigt. Insbesondere zeigen die beiden unteren Diagramme für die Transmission eine Charakteristik, wie sei beispielsweise mit Metall-Dielektrik-Interferenzfiltern mit jeweils geringfügiger unterschiedlicher Cavity-Weite erzielt werden können. Gemäß Fig. 6 fallen die Wellenlängen der Laser mit den Transmissionsmaxima zusammen, so daß die projizierten Halbbilder mit Hilfe der Augengläser, auf denen diese Filter als Aufdampfschichten vorgesehen sind, separat wahrgenommen werden können. Durch die hohe Trennschärfe von Metall-Dielektik-Interferenzfilter können die entsprechenden Wellenlängen für die den beiden Halbbildern zugeordneten Lasersystemen nahe benachbart gewählt werden. Bei einer hinreichenden Annäherung findet sogar eine identische Farbrezeptorerregung im linken und rechten Auge eines Betrachters statt, wodurch sogar eine nahezu farbidentische Wiedergabe der beiden Halbbilder möglich wird. Insbesondere werden große Spektralanteile des Tageslichts, die außerhalb der engen Transmissionsbereiche der Interferenzfilter liegen, ausgefiltert, wodurch auch bei Tageslichtprojektion eine störende Abschwächung des Bildkontrastes verhindert wird.

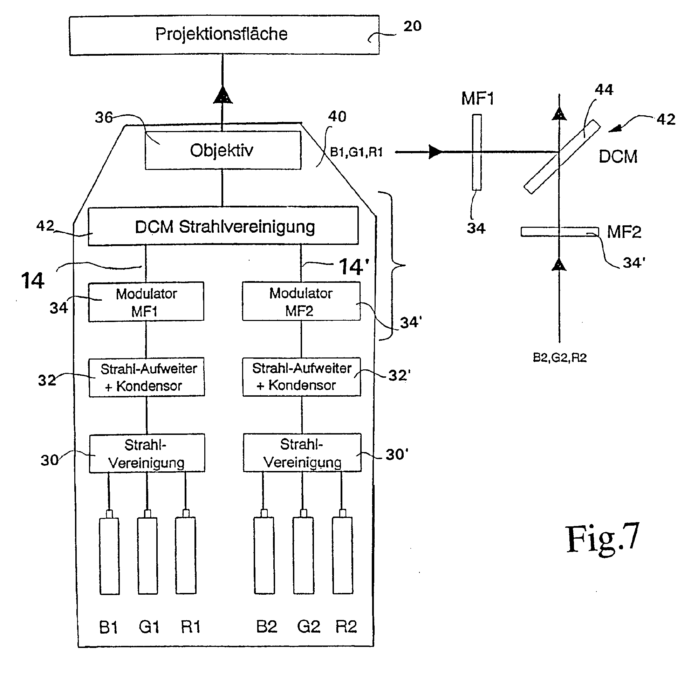

Ein weiteres Ausführungsbeispiel ist in Fig. 7 schematisch wiedergegeben. Der Unterschied zu dem Ausführungsbeispiel von Fig. 5 ist dadurch gegeben, daß die Lichtbündel 14, 14' von den Modulatoren 34 und 34' mit Hilfe einer weiteren Strahlvereinigung 42 vereinigt werden, bevor sie in das gemeinsame Objektiv 36 fallen, von dort gemeinsam auf die Projektionsfläche 20 geworfen werden, wonach sie zu den Augengläsern des Beobachters gestreut werden.

Die Strahlvereinigung 42 besteht hier aus einem dichroitischen Spiegel 44, wie er nebenstehend noch als Einzelschema mit den Modulatoren 34 und 34' angedeutet ist. Der eingesetzte dichroitische Spiegel 44 wies im Ausführungsbeispiel eine Mehrfachbandpaß-Charakteristik auf, wobei die aufsteigenden Flanken der dichroitischen Kenngrößen dieses Spiegels, bezüglich der Wellenlänge der Laser zwischen $B_1$ und $B_2$ zwischen $G_1$ und $G_2$ sowie zwischen $R_1$ und $R_2$ lagen. Die abfallenden Flanken der dichroitischen Charakteristik der Transmissionskurven lagen zwischen $B_2$ und $G_1$ sowie zwischen $G_2$ und $R_1$.

Neben dem beispielhaft gezeigten dichroitischen Spiegel 44, lassen sich auch andere Strahlführungssysteme verwirklichen, beispielsweise durch eine Schichtung von Gläsern unterschiedlichen Brechungsindexes, wobei der reflektierte Strahl dann durch Totalreflexion reflektiert und mit dem durchgehenden Strahl vereinigt wird. Die Ausführung derartiger Techniken ist in der Optik gut bekannt.

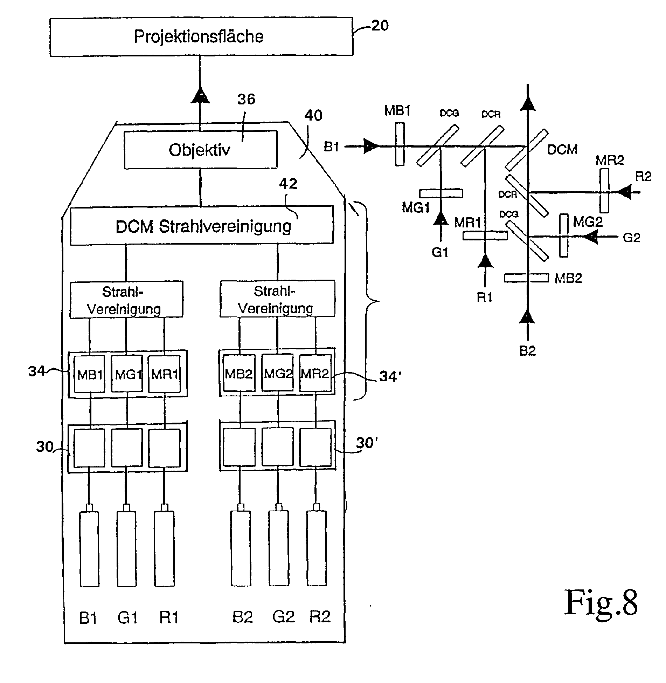

Ein weiteres Ausführungsbeispiel ist in Fig. 8 gezeigt, das sich vor allen Dingen für die farbige Videodarstellung mit Hilfe von LCD-Matrixen oder Kippspiegelmatrixen eignet. Das Licht der Laser $B_1$, $B_2$, $G_1$, $G_2$, $R_1$, $R_2$, wird durch getrennte Strahlaufweiter und Kondensoren 30, 30' geleitet und durch räumliche Modulatoren 34 und 34', beispielsweise LCD-Matrixen oder Kippspiegelmatrixen, örtlich mit unterschiedlicher Information beaufschlagt. Die Lichtbündel werden erst nachfolgend mit Hilfe von dichroitischen Spiegeln vereinigt, wie rechts neben der Schematik noch einmal im einzelnen angedeutet ist. Das vereinigte Lichtbündel fällt dann durch das gemeinsame Objektiv 36 auf die Projektionsfläche 20. Die Trennung in verschiedene farbige Bilder ist für LCD-Matrixen und Kippspiegelmatrixen deswegen besonders geeignet, weil in dieser Technik eine besonders hohe Auflösung beim heutigen Stand der Technik erreicht wird.

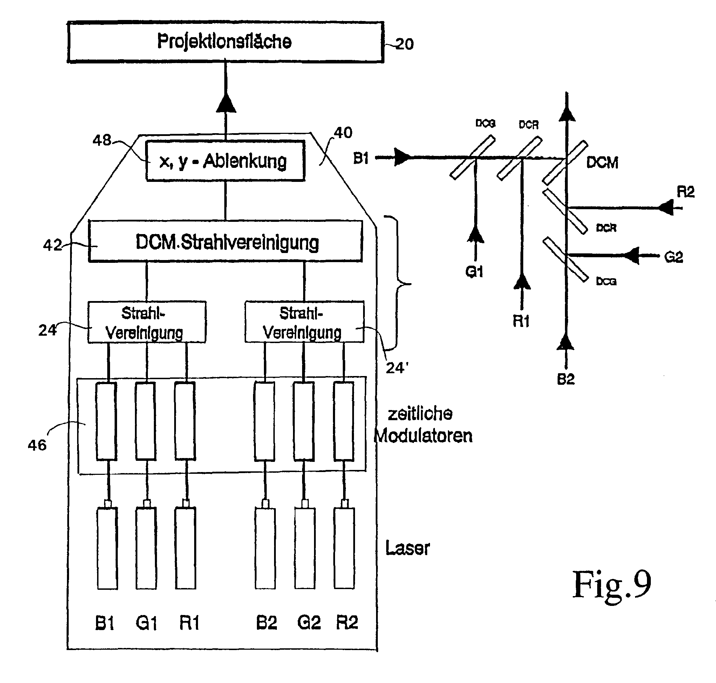

In Fig. 9 ist ein Ausführungsbeispiel gezeigt, wie es beispielsweise für die Rastertechnik, also bei einem bild- und zeilenmäßig schnell gerasterten Lichtbündel zum sequentiellen Beleuchten der einzelnen Bildpunkte eines Videobildes, besonders vorteilhaft ist. Dabei werden die von Lasern $R_1$, $R_2$, $B_1$, $B_2$, $G_1$, $G_2$, ausgehenden Lichtbündel durch einen Satz 46 von Modulatoren zeitlich moduliert. Die zeitliche Modulation erfolgt synchron mit der Ansteuerung des jeweiligen auf der Projektionsfläche 20 beleuchteten Bildpunktes des Videobildes.

Sechs Laserstrahlen werden dabei wie im Ausführungsbeispiel von Fig. 8 durch eine Strahlvereinigung mit dichroitischen Spiegeln 24, 24', 42 in einen einzelnen für die Beleuchtung einzelner Bildpunkte geeignet fokussierten Laserstrahl vereinigt, der auf eine einzige x-y-Ablenkung 48, beispielsweise einen Polygonspiegel und einen Schwingspiegel gerichtet wird, wobei die Modulation über den Satz Modulatoren 46 synchron mit dem jeweils vom gerasterten Lichtbündel beleuchteten Ort auf der Projektionsfläche 20 erfolgt.

Diese Ausführungsform ist für die Lasertechnik mit rasterndem Lichtbündel besonders günstig, da für beide Halbbilder nur eine einzige x-y-Ablenkung und möglicherweise nur ein Objektiv zur Aufweitung des Bildes erforderlich ist.

Die vorstehenden Ausführungsbeispiele zeigen, wie vielfältig die Erfindung bei verschiedensten Projektionstechniken anwendbar ist. Natürlich lassen sich viele Eigenschaften der verschiedenen Ausführungsbeispiele auch kombinieren oder auch andere Techniken aus dem Wissen des Fachmanns einsetzen. So kann man beispielsweise bei einem Ausführungsbeispiel von Fig. 9 auch Dispersionsprismen zur Strahlvereinigung einsetzen. Weiter ist es auch möglich, zur Strahlvereinigung integrierte Optiken zu verwenden, wie sie im Augenblick bei einigen Firmen, Hochschulen und anderen Instituten entwickelt werden. Ferner kann die x-y-Ablenkeinrichtung 48 beispielsweise auch mit akustooptischen Ablenkeinrichtungen aufgebaut werden.

Es ist auch möglich, dieses Verfahren der Kontrasterhöhung bei Bildschirmen, die mit Elektronenstrahlen bestrahlt werden, durch Auslegung des Bildschirms mit Leuchtstoffen schmaler spektraler Breite einzusetzen.

**Patentansprüche**

1. Verfahren zur Stereo-Projektion von Bildern auf einen Schirm (20) mit Hilfe von Lichtbündeln, wobei zur Projektion eingesetzte Lichtbündel aus einer Lichtquelle (12, 12') eines Projektors (40) emittiert werden,
   wobei an Beobachter des Stereo-Bildes Augengläser (24, 24) zur Selektion eines aus zwei Bildern gebildeten Stereobildes ausgehändigt werden,
   **dadurch gekennzeichnet,**
   **dass** ein einziger Projektor (40) zum Projizieren der Bilder vorgesehen ist,
   dessen zur Projektion eingesetzte Lichtbündel aus einer Lichtquelle (12, 12') im Projektor (40) emittiert werden dass das Licht der Lichtquelle (12, 12') mittels Projektorfiltern (26,26') so gefiltert wird, dass es mindestens einen spektralen Peak in einem Bereich der dominanten Erregung der Farbrezeptoren des sichtbaren Wellenlängenbereichs mit einer Halbwertsbreite kleiner als 30 nm, aufweist,
   **dass** die Augengläser (24, 24) jeweils eine wellenlängenabhängige Transmissionsfunktion aufweisen, wobei die Transmissionsfunktionen der Augengläser (24,24') den Spektralverlaufen des Projektors mit den Projektorfiltern (26,26') entsprechen, indem jeweils das Augenglas (24,24') und der zugehörige Projektorfilter (26,26') als dielektrische Interferenzfilter in gleicher Weise ausgebildet sind,
   wodurch von jedem Augenglas (24, 24) Licht im Wellenlängenbereich von mindestens einem spektralen Peak oder bei mehreren spektralen Peaks im Wellenlängenbereich von mindestens einem von diesen durchgelassen wird

und die Lichtintensität für Licht mit Wellenlängen außerhalb dieses oder dieser spektralen Peaks verringert und in Bereichen vollständig ausgefiltert wird, und **dass** die das Stereo-Bild enthaltenden Lichtbündel mittels eines einzigen gemeinsamen Objektives des Projektors projiziert werden.

2. System mit einem Stereo-Bild-Projektor (40) zur Darstellung eines Stereo-Bildes auf einem Schirm (20) mit Hilfe von Lichtbündeln zur Durchführung des Verfahrens nach Anspruch 1, **gekennzeichnet durch** einen einzigen Projektor (40) mit einer das Lichtbündel emittierenden Lichtquelle (12, 12'), deren Licht mindestens einen spektralen Peak in einem Bereich der dominanten Erregung der Farbrezeptoren des sichtbaren Wellenlängenbereichsmit einer Halbwertsbreite kleiner als 30 nm aufweist, sowie **durch** Augengläser (24, 24') zur Selektion des aus zwei Bildern gebildeten Stereobildes, für die jeweils eine wellenlängenabhängige Transmissionsfunktion vorgesehen ist, wobei die Transmissionsfunktionen der Augengläser (24,24') den Spektralverlaufen des Projektors mit den Projektorfiltern (26,26') entsprechen, indem jeweils das Augenglas (24,24') und der zugehörige Projektorfilter (26,26') als dielektrische Interferenzfilter in gleicher Weise ausgebildet sind, wodurch vonden Augenglauser (24,24') ausschließlich Licht im Wellenlängenbereich des mindestens einen spektralen Peaks durchgelassen wird oder bei mehreren spektralen Peaks Licht im Wellenlängenbereich von mindestens einem von diesen durchgelassen wird und die Lichtintensität für Licht mit Wellenlängen außerhalb dieses oder dieser spektralen Peaks verringert und in Bereichen vollständig ausgefiltert ist, wobei die das Stereo-Bild enthaltenden Lichtbündel mittels eines einzigen gemeinsamen Objektives des Projektors projiziert werden.

3. System nach Anspruch 2, **dadurch gekennzeichnet, dass** die Lichtquelle so gewählt ist, dass die spektralen Peaks eine Halbwertsbreite kleiner als 5 nm aufweisen.

4. System nach Anspruch 2 oder 3, **dadurch gekennzeichnet, dass** die Augengläser (24, 24') in einer den Köpfen von Beobachtern angepassten Brille angeordnet sind und jeweils gewölbt insbesondere in der Art einer Teilkugelschale für das konzentrische Anordnen um das Auge eines Beobachters gewölbt ausgebildet sind .

5. System nach einem der vorstehenden Ansprüche 2 bis 4, **dadurch gekennzeichnet, dass** die Augenglauser (24,24') in einer den Köpfen von Beobachtern angepassten Brille angeordnet sind, an der eine Abschirmung gegen Licht vorgesehen ist, die einen Lichteinfall jeweils zwischen Augenglas (24, 24') und Auge des Beobachters verhindert.

6. System nach einem der vorstehenden Ansprüche 2 bis 5, **dadurch gekennzeichnet, dass** das jeweilige Lichtbündel mindestens drei spektrale Peaks aufweist.

7. System nach Anspruch 6, **dadurch gekennzeichnet, dass** die Lichtquelle (12, 12') Licht mit spektralen Peaks geeigneter Intensität und Schwerpunktswellenlängen emittiert, um es durch die Augengläser (24,24') physiologisch als Weiß erfassbar zu machen.

8. System nach Anspruch 6, **dadurch gekennzeichnet, dass** zum Darstellen eines Videobildes eine Steuereinrichtung vorgesehen ist, mit der die Intensitäten der spektralen Peaks in den Lichtbündeln, unabhängig voneinander ansteuerbar sind, und dass die Lichtquelle (12, 12') für eine Lage der spektralen Peaks im Wellenlängenspektrum ausgebildet ist, bei der Lichtbündel mit dieser Ansteuerung erzeugbar sind, deren Licht physiologisch als Weiß erfassbar ist.

9. System nach einem der Ansprüche 2-8 zur Darstellung stereoskopischer Videobilder, durch **gekennzeichnet**, dass jedes Lichtbündel einen zur Abbildung einzelner Bildpunkte des Videobildes geeigneten Durchmesser aufweist und eine Ablenkeinrichtung (48) vorgesehen ist, die die mit Information für beide Augen spektral beaufschlagten Lichtbündel ablenkt.

**Claims**

1. Method for the stereo projection of images onto a screen (20) with the aid of light beams,
light beams used for the projection being emitted from a light source (12, 12') of a projector (40) eyeglasses (24, 24') for the selection of a stereo image formed from two images being issued to observers of the stereo image,
**characterized**
**in that** provision is made of a single projector (40) for projecting the images,
and its light beams used for projection are emitted from a light source (12, 12') in the projector (40),
**in that** the light from the light source (12, 12') is filtered by means of projector filters (26, 26'), in such a way that it has at least one spectral peak in a range of the dominant excitation of the colour receptors of the visible wavelength range with a full width at half maximum of less than 30 nm,
**in that** the eyeglasses (24, 24') each have a wavelength-dependent transmission function, the transmission functions of the eyeglasses (24, 24') corresponding to the spectral profiles of the projector with the projector filters (26, 26') by virtue of the fact that in each case the eyeglass (24, 24') and the associated projector filter (26, 26') are embodied as dielectric interference filters in the same way, whereby each eyeglass (24, 24') transmits light in the wavelength range of at least one spectral peak or, in the case of a plurality of spectral peaks, in the wavelength range of at least one of said peaks and reduces the light intensity for light having wavelengths outside said spectral peak or peaks and completely filters it out in ranges,
and **in that** the light beams containing the stereo image are projected by means of a single common objective of the projector.

2. System comprising a stereo image projector (40) for representing a stereo image on a screen (20) with the aid of light beams for carrying out the method according to claim 1,
**characterized by** a single projector (40) having a light source (12, 12') that emits the light beam,
the light from said light source being filtered by means of projector filters (26, 26') in such a way that it has at least one spectral peak in a range of the dominant excitation of the colour receptors of the visible wavelength range with a full width at half maximum of less than 30 nm,
and also by eyeglasses (24, 24') for the selection of the stereo image formed from two images,
for which eyeglasses a respective wavelength-dependent transmission function is provided, the transmission functions of the eyeglasses (24, 24') corresponding to the spectral profiles of the projector with the projector filters (26, 26') by virtue of the fact that in each case the eyeglass (24, 24') and the associated projector filter (26, 26') are embodied as dielectric interference filters in the same way,
whereby the eyeglasses (24, 24') transmit exclusively light in the wavelength range of the at least one spectral peak or, in the case of a plurality of spectral peaks, light in the wavelength range of at least one of said peaks
and reduce the light intensity for light having wavelengths outside said spectral peak or peaks and completely filter it out in ranges,
the light beams containing the stereo image being projected by means of a single common objective of the projector.

3. System according to Claim 2, **characterized in that** the light source is chosen such that the spectral peaks have a full width at half maximum of less than 5 nm.

4. System according to Claim 2 or 3, **characterized in that** the eyeglasses (24, 24') are arranged in spectacles adapted to the heads of observers and are embodied in each case in curved fashion, in particular curved in the manner of a partial spherical shell for concentric arrangement around the eye of an observer.

5. System according to any of the preceding Claims 2 to 4, **characterized in that** the eyeglasses (24, 24') are arranged in spectacles adapted to the heads of observers, a shield against the light being provided on said spectacles and preventing incidence of light respectively between eyeglass (24, 24') and eye of the observer.

6. System according to any of the preceding Claims 2 to 5, **characterized in that** the respective light beam has at least three spectral peaks.

7. System according to Claim 6, **characterized in that** the light source (12, 12') emits light with spectral peaks of suitable intensity and centroid wavelengths to make it physiologically ascertainable as white through the eyeglasses (24, 24').

8. System according to Claim 6, **characterized in that**, for representing a video image, a control device is provided, by means of which intensities of the spectral peaks in the light beams can be driven independently of one another, and **in that** the light source (12, 12') is embodied for a position of the spectral peaks in the wavelength spectrum at which light beams whose light is physiologically ascertainable as white can be generated by means of this driving.

9. System according to any of Claims 2-8 for representing stereoscopic video images, **characterized in that** each light beam has a diameter suitable for imaging individual pixels of the video image and a deflection device (48) is provided, which deflects the light beams which have information for both eyes spectrally applied to them.

**Revendications**

1. Procédé de projection stéréoscopique d'images sur un écran (20) à l'aide de faisceaux lumineux, les faisceaux lumineux utilisés pour la projection étant émis depuis une source de lumière (12, 12') d'un projecteur (40), des verres oculaires (24, 24') destinés à sélectionner une image stéréoscopique constituée de deux images étant remis à l'observateur de l'image stéréoscopique, **caractérisé en ce qu'**il n'est prévu qu'un seul projecteur (40) pour projeter les images dont les faisceaux lumineux utilisés pour la projection sont émis depuis une source de lumière (12, 12') dans le projecteur (40),
que la lumière de la source de lumière (12, 12') est filtrée au moyen de filtres de projecteur (26, 26') de telle sorte qu'elle présente au moins une crête spectrale dans une plage de l'excitation dominante des récepteurs de couleur de la plage de longueurs d'onde visibles présente avec une largeur de valeur moyenne inférieure à 30 nm,

que les verres oculaires (24, 24') présentent respectivement une fonction de transmission dépendante de la longueur d'onde, les fonctions de transmission des verres oculaires (24, 24') correspondant aux courbes spectrales du projecteur avec les filtres de projecteur (26, 26') **en ce que** le verre oculaire (24, 24') et le filtre de projecteur (26, 26') associé sont respectivement réalisés de la même manière sous la forme d'un filtre à interférences diélectrique,

ce qui a pour effet que chaque verre oculaire (24, 24') laisse passer la lumière dans la plage de longueurs d'onde d'au moins une crête spectrale ou, en présence de plusieurs crêtes spectrales, dans la plage de longueurs d'onde d'au moins une de celles-ci et l'intensité lumineuse de la lumière aux longueurs d'onde en-dehors de cette ou de ces crêtes spectrales est réduite et totalement éliminée par filtrage dans certaines plages,

et que les faisceaux lumineux contenant l'image stéréoscopique sont projetés au moyen d'un seul objectif commun du projecteur.

2. Système comprenant un projecteur d'images stéréoscopiques (40) pour représenter une image stéréoscopique sur un écran (20) à l'aide de faisceaux lumineux destiné à mettre en oeuvre le procédé selon la revendication 1, **caractérisé par** un unique projecteur (40) muni d'une source de lumière (12, 12') qui émet les faisceaux lumineux et dont la lumière est filtrée au moyen de filtres de projecteur (26, 26') de telle sorte qu'elle présente au moins une crête spectrale dans une plage de l'excitation dominante des récepteurs de couleur de la plage de longueurs d'onde visibles présente avec une largeur de valeur moyenne inférieure à 30 nm,

et par des verres oculaires (24, 24') destinés à sélectionner une image stéréoscopique constituée de deux images et pour lesquelles une fonction de transmission dépendante de la longueur d'onde est à chaque fois prévue, les fonctions de transmission des verres oculaires (24, 24') correspondant aux courbes spectrales du projecteur avec les filtres de projecteur (26, 26') en ce que le verre oculaire (24, 24') et le filtre de projecteur (26, 26') associé sont respectivement réalisés de la même manière sous la forme d'un filtre à interférences diélectrique,

ce qui a pour effet que les verres oculaires (24, 24') laissent exclusivement passer la lumière dans la plage de longueurs d'onde de l'au moins une crête spectrale ou, en présence de plusieurs crêtes spectrales, la lumière dans la plage de longueurs d'onde d'au moins une de celles-ci et l'intensité lumineuse de la lumière aux longueurs d'onde en-dehors de cette ou de ces crêtes spectrales est réduite et totalement éliminée par filtrage dans certaines plages,

les faisceaux lumineux qui contiennent l'image stéréoscopique étant projetés au moyen d'un seul objectif commun du projecteur.

3. Système selon la revendication 2, **caractérisé en ce que** la source de lumière est choisie de telle sorte que les crêtes spectrales présentent une largeur de valeur moyenne inférieure à 5 nm.

4. Système selon la revendication 2 ou 3, **caractérisé en ce que** les verres oculaires (24, 24') sont disposés dans une monture de lunette adaptée aux têtes des observateurs et sont respectivement de forme bombée, notamment bombés à la manière d'une coque sphérique partielle destinée à être disposée de manière concentrique autour de l'oeil d'un observateur.

5. Système selon l'une des revendications précédentes 2 à 4, **caractérisé en ce que** les verres oculaires (24, 24') sont disposés dans une monture de lunette adaptée aux têtes des observateurs et sur laquelle est prévue une protection contre la lumière qui empêche une incidence de la lumière à chaque fois entre le verre oculaire (24, 24') et l'oeil de l'observateur.

6. Système selon l'une des revendications précédentes 2 à 5, **caractérisé en ce que** le faisceau lumineux correspondant présente au moins trois crêtes spectrales.

7. Système selon la revendication 6, **caractérisé en ce que** la source de lumière (12, 12') émet de la lumière avec des crêtes spectrales ayant une intensité appropriée et des longueurs d'onde d'intensité afin de la rendre perceptible physiologiquement comme du blanc par les verres oculaires (24, 24').

8. Système selon la revendication 6, **caractérisé en ce que** pour représenter une image vidéo, il est prévu un dispositif de commande avec lequel les intensités des crêtes spectrales dans les faisceaux lumineux peuvent être commandées indépendamment les rues des autres et que la source de lumière (12, 12') est configurée pour une position des crêtes spectrales dans le spectre de longueurs d'onde à laquelle cette commande permet de générer des faisceaux lumineux dont la lumière peut être perçue physiologiquement comme étant blanche.

9. Système selon l'une des revendications 2 à 8 pour représenter des images vidéo stéréoscopiques, **caractérisé en ce que** chaque faisceau lumineux présente un diamètre approprié pour représenter les pixels individuels de l'image vidéo et il est prévu un

**EP 0 909 517 B1**

dispositif de déviation (48) qui dévie les faisceaux lumineux chargés d'informations spectrales pour les deux yeux.

# Fig.1

Fig.2

## Transmission für 24

Blau | Grün | Rot

$\lambda$ /nm

## Transmission für 24'

$\lambda$/nm

# Fig.3

**Fig.4**

Projektionsfläche ~20

~40

36~ Objektiv    Objektiv ~36'

34~ Modulator
MF1    Modulator
MF2    34'

30~ Strahl-Aufweiter
+ Kondensor    Strahl-Aufweiter
+ Kondensor    30'

14~    14'

32~ Strahl-
Vereinigung    Strahl-
Vereinigung    32'

12~    12'

B1  G1  R1    B2  G2  R2

16(16')

Fig.5

Fig.6

Fig.7

EP 0 909 517 B1

Fig.8

Fig.9

**IN DER BESCHREIBUNG AUFGEFÜHRTE DOKUMENTE**

**In der Beschreibung aufgeführte Nicht-Patentliteratur**

- *Patents Abstract of Japan,* 10. August 1989, vol. 13 (357), 915